# DEMANDE DE BREVET EUROPEEN

(11) **EP 4 120 134 A1**
(43) Date de publication de la demande: **18.01.2023**
(21) Numéro de dépôt: 21185887.3
(22) Date de dépôt: 15.07.2021
(51) Int. Cl.: G06K 19/04, B65D 39/00, G06K 19/077

(54) **PROCÉDÉ DE FABRICATION D'UN BOUCHON DE BOUTEILLE INTÉGRANT UN TAG RFID ET BOUCHON**

(71) Demandeur: Les Bouchages Delage, 16130 Gensac-la-Pallue (FR)
(72) Inventeur: DESLIAS, Olivier, 16200 BOURG CHARENTE (FR); CLERE, Laurent, 16100 COGNAC (FR); DELAGE, Mr Christian, 16100 COGNAC (FR)
(74) Mandataire: Ipside

(57) **Abrégé**

L'invention propose un procédé simplifié de fabrication d'un bouchon, ledit bouchon présentant une tête comportant une enveloppe comprenant à son intérieur un tag RFID et un lest, caractérisé en ce que ledit procédé comporte les actions suivantes :
- obtention d'un tag RFID et d'un lest comportant respectivement un trou axial
- assemblage du tag RFID sur le lest pour former un ensemble dans lequel le trou du lest et le trou du tag RFID sont superposés pour définir un canal axial dudit ensemble ;
- d'injection l'enveloppe de la tête, dans laquelle ledit ensemble est disposé dans un moule, et une buse d'injection est insérée dans le canal axial dudit ensemble pour injecter de la matière plastique contre un fond du moule, ladite matière plastique se répartissant dans le moule pour enrober l'ensemble à partir dudit canal axial

L'invention concerne également l'intégration d'un tag RFID dans un environnement métallique et les bouchons obtenus avec ledit procédé.

## Description

### Domaine de l'invention

La présente invention se rapporte au domaine des bouchons comportant un tag RFID et leur procédé de fabrication.

Plus particulièrement, l'invention se rapporte à un bouchon intégrant un tag RFID adapté à fonctionner dans un environnement métallique et son procédé de fabrication simplifié.

### Etat de la technique

On connaît dans l'état de la technique des bouchons comportant un tag RFID, pour intégrer des nouvelles fonctions, par exemple pour faciliter la traçabilité et la logistique de la chaîne de production d'un produit, ainsi que pour mettre à disposition des informations du produit et/ou pour l'authentifier.

L'intégration d'un dispositif d'identification par radiofréquence RFID « tag RFID » pose toutefois des contraintes en pratique, notamment lors de son intégration au moyen d'un procédé d'injection plastique. En effet, les contraintes thermiques et mécaniques exercées lors de l'étape d'injection plastique peuvent endommager le tag RFID. On connaît dans l'état de la technique des procédés d'intégration d'un tag RFID par un procédé de surmoulage. Par exemple le document FR 3077025 A propose un procédé de fabrication d'un bouchon intégrant un tag RFID dans lequel un logement est aménagé dans un moule de surmoulage pour protéger le tag RFID, et dans lequel une adaptation de l'outillage d'injection est effectuée. Ce procédé est efficace pour protéger le tag RFID lors de l'opération d'injection plastique. Des nouveaux procédés sont toutefois souhaités pour améliorer la facilité de production de ces bouchons.

D'autre part, les bouchons à finition métallique sont également très appréciés dans le marché de luxe, ainsi que les bouchons intégrant un lest, c'est-à-dire un corps pesant destiné à charger le poids du bouchon. Il est donc souhaitable de pouvoir intégrer un tag RFID dans un environnement métallique. Toutefois, dans la pratique cette intégration pose plusieurs problèmes, par exemple, la lecture du tag RFID est perturbée par la présence des composants métalliques dans le bouchon. De plus, même en absence d'un composant métallique, la simple fabrication d'un bouchon intégrant un lest et un tag RFID nécessite des étapes supplémentaires pour l'obtention d'une enveloppe de la tête et l'intégration du tag RFID et le lest

Par exemple, la demande de brevet EP 3 594 857 A1 propose une solution pour intégrer un composant RFID dans la tête d'un bouchon comportant une finition extérieure métallisée. En particulier, la tête du bouchon est formée à partir d'une enveloppe comportant une partie inférieure et une partie supérieure assemblées entre elles, et comportant un tag RFID et un lest à son intérieur. Afin de garantir le bon fonctionnement du tag RFID, ce dernier est positionné sensiblement centré sur un plan radial de la tête, et le lest est séparé de l'insert par au moins un espace vide aménagé à l'intérieur de la tête.

Le bouchon ainsi obtenu permet de satisfaire aux besoins du marché de luxe par sa finition métallique, la sensation de qualité en main et un bon fonctionnement du composant RFID. Toutefois, le procédé de production dudit bouchon impose certaines contraintes au fabricant, notamment du nombre d'étapes nécessaires pour obtenir ledit bouchon. En effet, le procédé de fabrication de la tête comporte :
- une première étape d'injection de l'enveloppe inférieure de la tête ;
- une deuxième étape d'injection de l'enveloppe supérieure de la tête ;
- une troisième étape de fixation du composant RFID sur l'une des enveloppes de la tête ;
- une quatrième étape d'obtention d'un lest;
- une cinquième étape d'assemblage de l'ensemble du lest, avec l'enveloppe supérieure et inférieure avec le composant RFID.

D'un point de vue industriel, il est donc souhaitable de disposer d'un procédé de fabrication et d'intégration d'un composant RFID pouvant être implémenté de manière simplifiée, ainsi que permettant d'assurer le bon fonctionnement du tag RFID dans un environnement métallique.

### Exposé de l'invention

Le but de l'invention est de proposer un nouveau procédé de fabrication d'un bouchon comportant un tag RFID, ledit procédé étant facile à mettre en œuvre et permettant d'intégrer le tag RFID dans ledit bouchon sans l'endommager. Un autre objectif de l'invention est d'assurer le bon fonctionnement dudit tag RFID en fonction d'un environnement métallique apporté par ledit bouchon.

En particulier, l'invention propose un procédé de fabrication d'un bouchon, ledit bouchon présentant une tête comportant une enveloppe comprenant à son intérieur un tag RFID et un lest, caractérisé ledit procédé comporte les actions suivantes :
- obtention d'un tag RFID et d'un lest comportant respectivement un trou axial
- assemblage du tag RFID sur le lest pour former un ensemble dans lequel le trou du lest et le trou du tag RFID sont superposés pour définir un canal axial d'injection dudit ensemble ;
- injection de l'enveloppe de la tête, dans laquelle ledit ensemble est disposé dans un moule, et une buse d'injection est insérée dans le canal axial dudit ensemble pour injecter de la matière plastique contre un fond du moule, ladite matière plastique se répartissant dans le moule pour enrober l'ensemble à partir d'un centre axial dudit ensemble.

Ce procédé est très avantageux en ce qu'il permet l'injection plastique de l'enveloppe en une seule étape, et cette étape permet également l'intégration de l'ensemble comportant le lest et le tag RFID, tout en protégeant le tag RFID de son endommagement

Dans un mode de réalisation, le procédé comporte une étape préalable dans laquelle le tag RFID est recouvert d'une part et de l'autre d'une couche de protection en matière plastique. Il est ainsi possible d'améliorer la protection du tag RFID contre les contraintes mécaniques et thermiques subies lors de l'étape d'injection.

Dans un mode de réalisation, le procédé comporte une étape d'ajustement d'une fréquence initiale du tag RFID comportant les sous étapes-suivantes :
- détermination d'une fréquence de résonance cible du tag RFID pour son fonctionnement ; et
- sélection d'une fréquence de résonance initiale du tag RFID avant d'être intégré dans le bouchon, ladite fréquence de résonance initiale permettant d'obtenir une fréquence de résonance finale proche de la fréquence de résonance cible après l'injection de l'enveloppe de la tête, et lorsque ledit tag RFID est intégré dans le bouchon.

Dans un mode de réalisation, le lest comporte un composant métallique, et la fréquence initiale du tag RFID est supérieure ou inférieure à la fréquence cible. Le composant métallique est par exemple un lest en métal ou en matière plastique densifiée avec des charges métalliques et/ou un revêtement métallique de l'enveloppe.

Dans un mode de réalisation, la fréquence de résonance cible est d'environ 13,56 MHz et la fréquence de résonance initiale du tag RFID est :
- supérieure à 13,56 MHz pour un lest matière plastique densifiée avec des charges minérales métalliques; ou
- inférieure à 13,56 MHz pour un lest en métal.

L'invention concerne également un bouchon de récipient comportant une tête comportant une enveloppe intégrant un ensemble comprenant un tag RFID et un lest, caractérisé en ce que :
- le tag RFID et le lest comportent respectivement un trou axial ;
- le tag RFID est assemblé sur le lest de manière à superposer le trou dudit tag RFID et le trou dudit lest, et de sorte à définir un canal axial d'injection plastique ;
- l'enveloppe est composée d'une seule pièce en matière plastique recouvrant ledit ensemble.

Le bouchon de l'invention peut comporter également toutes ou partie des caractéristiques suivantes considérées isolément ou en toute combinaison techniquement opérable.
- Le lest comporte une forme épousant sensiblement la forme de l'enveloppe de tête et comporte optionnellement un évidemment pour loger le tag RFID.
- Le tag RFID se présente sous la forme d'un anneau antenne et/ou dans lequel le tag RFID est complexé par au moins une couche de matière plastique additionnelle.
- Le canal axial du bouchon comporte de la matière plastique de l'enveloppe de tête.
- Le bouchon comporte une cale intermédiaire disposée entre le lest et le tag RFID et/ou dans lequel un espace vide est aménagé entre le lest et le tag RFID.
- L'enveloppe comporte un revêtement extérieur métallique.
- Le lest est en matière plastique densifiée comportant des charges minérales neutres et/ou le tag RFID est écarté du lest à l'intérieur du bouchon, et le tag RFID présente : -une fréquence de résonance finale lorsque le tag RFID est intégré dans le bouchon ; et -une fréquence de résonance initiale mesurée lorsque ledit TAG RFID est à l'extérieur du bouchon étant égal ou sensiblement proche de ladite fréquence de résonance finale ;
- Le lest est en matière plastique densifiée avec des charges minérales métalliques, et le tag RFID présente : -une fréquence de résonance finale mesurée lorsque le tag RFID est intégré dans le bouchon ; et -une fréquence de résonance initiale mesurée lorsque ledit TAG RFID est à l'extérieur du bouchon étant supérieure à ladite fréquence de résonance finale.
- Le lest est en matériau métallique tel que de l'acier ou du zamak, et le tag RFID présente : -une fréquence de résonance finale lorsque le tag RFID est intégré dans le bouchon ; et - une fréquence de résonance initiale mesurée lorsque ledit TAG RFID est à l'extérieur du bouchon étant inférieure à ladite fréquence de résonance cible.

### Brève description des dessins

On comprendra mieux l'invention à l'aide de la description, faite ci-après à titre purement explicatif, des modes de réalisation de l'invention, en référence aux figures dans lesquelles :
- La Figure 1 représente schématiquement une vue latérale d'un bouchon selon l'invention.
- La Figure 2 illustre une représentation schématique d'une vue latérale d'une section longitudinale d'un mode de réalisation du bouchon selon l'invention.
- La figure 3 illustre une représentation schématique d'une vue latérale d'une section longitudinale d'un deuxième mode de réalisation du bouchon selon l'invention.
- La figure 4 illustre un schéma du procédé de fabrication d'un bouchon selon l'invention.

### Description détaillée de modes de réalisation de l'invention

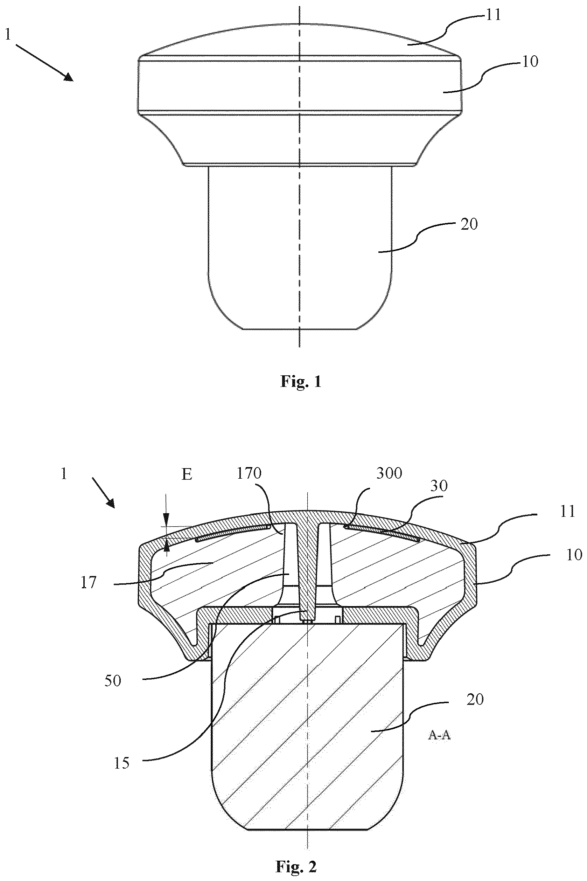

La présente invention a pour but de proposer un procédé simplifié de fabrication par injection plastique d'un bouchon intégrant un tag RFID tel qu'illustré aux figures 1, 2 et 3. Un deuxième objectif de l'invention est que ce procédé soit apte à intégrer ledit tag RFID sans l'endommager, ainsi qu'à assurer son fonctionnement dans un environnement métallique. L'invention porte également sur les bouchons obtenus par ledit procédé.

Pour les besoins de la description et en référence aux figures, il sera considéré un sens supérieur et un sens inférieur suivant un axe vertical Z du bouchon de l'invention, le sens supérieur pointant vers la tête du dispositif de fermeture et le sens inférieur pointant vers le corps obturateur. Les différents éléments du bouchon devront être également interprétés selon ces repères, en particulier lors de leur position sur celle-ci, y compris lorsqu'ils seront décrits isolément Par bouchon on entend un dispositif de fermeture destiné notamment à l'obturation des récipients tel que des bouteilles. Par tag RFID on entend un dispositif d'identification par radiofréquence, présenté souvent sous la forme d'une étiquette RFID intégré optionnellement dans un support et nommé tag RFID.

La figure 1 montre un exemple d'un bouchon 1 selon un mode de réalisation de l'invention. Le bouchon 1 comporte une tête 10 et un corps obturateur 20 destiné à fermer par insertion l'ouverture d'un col d'un récipient, tel que le col d'une bouteille. Le corps obturateur est typiquement réalisé en liège, ou dans d'autres matériaux plastiques de substitution présentant une certaine flexibilité.

La tête 10 permet de manœuvrer la fermeture pour la tirer et l'insérer dans le col d'un récipient, ainsi que d'offrir un dessin esthétique à la portion supérieure dudit dispositif de fermeture. La tête 10 comporte une enveloppe 11 intégrant les éléments esthétiques du bouchon, ladite enveloppe comportant une surface extérieure décorée et une surface intérieure. Par exemple, l'enveloppe est réalisée en matière plastique et sa surface extérieure comporte un revêtement métallique décoratif.

La figure 2 illustre schématiquement une section du bouchon de la figure 1 suivant la coupe A-A selon un premier mode de réalisation de l'invention. Comme illustré sur la figure 1, l'enveloppe 11 forme une coque à l'intérieur de laquelle se trouvent des composants internes du dispositif, notamment un lest 17 et un tag RFID 30. Le tag RFID 30 et le lest 17 présentent respectivement un trou 300, 170 axial débouchant et déterminant un canal axial d'injection plastique pour l'injection de l'enveloppe de la tête. L'enveloppe 110 de la tête 10 ainsi obtenue est formée d'une seule pièce entourant au moins partiellement les composants internes de la tête.

Dans un mode de réalisation préféré, le tag RFID 30 est choisi sous la forme d'un anneau antenne circulaire et le trou 300 du tag RFID présente un diamètre prédéfini en fonction d'un diamètre de passage nécessaire pour une buse d'injection. De même, un diamètre du trou 170 du lest est choisi pour permettre l'insertion de ladite buse d'injection. La tag RFID et le lest sont assemblés de manière à superposer leurs trous et former ledit canal axial 15 d'injection. Un diamètre du canal axial d'injection est par exemple de 11 mm. De préférence, le diamètre interne de l'ouverture du tag RFID 30 est supérieur au diamètre interne de l'ouverture 170 du lest 17, et de manière que le trou 300 axial du tag RFID soit en retrait de la voie de passage de la matière plastique passant par le canal axial d'injection. Dans le mode de réalisation illustré, le bouchon de l'invention comporte de la matière plastique le long du centre du canal axial d'injection et un espace vide 50 entourant ladite matière plastique, correspondant à l'espace occupé par les parois de la buse d'injection lors l'injection plastique de l'enveloppe.

De préférence, le lest 17 présente une forme et un diamètre extérieur choisis pour épouser sensiblement une forme souhaitée pour l'enveloppe 11 de la tête. Dans un mode de réalisation, le lest 17 est de nature métallique. Dans un autre mode de réalisation, le lest est en matière plastique densifiée par charges minérales ou charges métalliques ou tout autre matériau non métallique. Par exemple, le lest est réalisé en acier, zamak, plastique densifié avec charges minérales neutres et/ou métalliques. Le lest est obtenu également par un procédé d'injection plastique lui apportant la forme souhaitée, soit il possède une forme compacte et il est intégré dans un support apportant ladite forme souhaitée (non illustré).

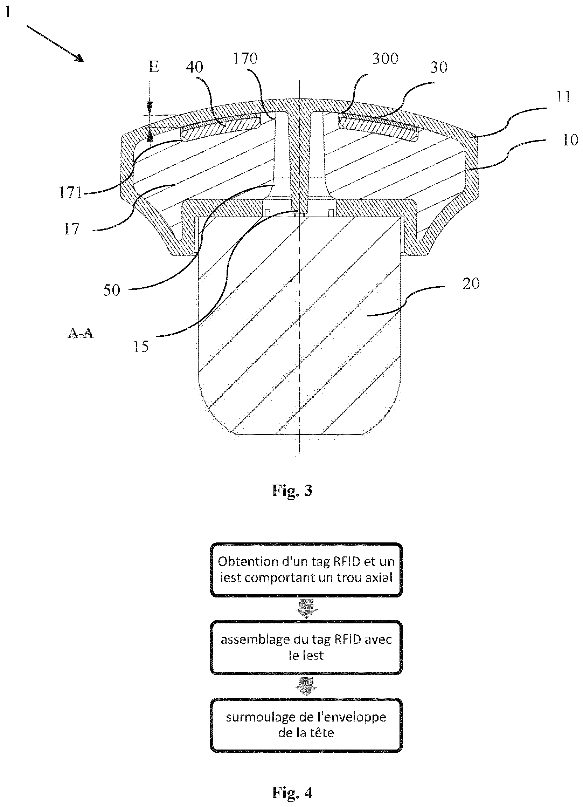

Dans le mode de réalisation illustré aux figures 2 et 3, le lest 17 comporte un évidemment 171 adoptant sensiblement la forme du tag RFID 30 en forme d'anneau antenne pour recevoir ledit tag RFID 30. Toutefois, cet évidemment est optionnel car le TAG est assez fin. De même, le tag RFID est complexé par une ou plusieurs couches additionnelles de matière plastique sous la forme d'un « inlay ». Par exemple, le tag RFID 30 est complexé par deux couches additionnelles de PET d'une épaisseur minimale de 100µm. Il est ainsi possible d'améliorer la résistance du tag RFID aux contraintes thermiques et mécaniques lors de l'opération d'injection plastique.

Dans les modes de réalisation illustrés, le tag RFID est disposé sur une partie supérieure du lest Dans d'autres modes de réalisation non illustrés, le tag RFID est disposé sur une partie inférieure du lest

Dans un mode de réalisation illustré à la figure 3, une cale intermédiaire 40 de matière non métallique est disposée entre le lest 17 et le tag RFID 30. Ce mode de réalisation permet de choisir un lest apportant un environnement métallique et limiter les perturbations dudit environnement sur le tag RFID 30. De préférence, la cale intermédiaire est réalisée en matière plastique. Dans un autre mode de réalisation non illustré et dans le même objectif, le tag RFID 30 et le lest 17 sont séparés par un espace vide aménagé à l'intérieur de la tête et/ou par une couche de matériau limitant les interférences électromagnétiques, tel que de la ferrite. Dans un mode de réalisation la couche de ferrite est disposée directement sur le lest ou sur le tag RFID.

Le bouchon de l'invention est très avantageux en ce qu'il peut être obtenu par un procédé de fabrication simplifié mettant en œuvre une seule étape d'injection plastique l'enveloppe de la tête, et dans laquelle sont intégrés les composés internes du bouchon.

Plus particulièrement, l'invention propose un procédé de fabrication (Fig. 4) d'un bouchon comportant une enveloppe 11 de tête 10 renfermant un tag RFID 30 et un lest 17, ledit procédé comportant les actions suivantes :
- obtention d'un tag RFID 30 et d'un lest 17 comportant respectivement un trou 300, 170 axial débouchant ;
- assemblage du tag RFID sur le lest 17pour former un ensemble dans lequel le trou 170 du lest 17 et le trou 300 tag RFID 30 sont superposés pour définir un canal axial 15 d'injection plastique dudit ensemble ;
- injection de l'enveloppe 11 de la tête, dans laquelle ledit ensemble est disposé dans un moule, et une buse d'injection est insérée dans le canal axial dudit ensemble pour injecter de la matière plastique contre un fond du moule, ladite matière plastique se répartissant dans le moule pour enrober l'ensemble à partir dudit canal axial 15.

Ce procédé de fabrication est très avantageux en ce qu'il permet d'obtenir un dispositif de fermeture intégrant un tag RFID dans une seule opération d'injection, ce procédé permettant d'intégrer le tag RFID sans l'endommager et sans besoin de modifier le moule et/ou l'outil d'injection.

En particulier, lors de l'étape d'injeciton la buse d'injection traverse le canal axial pour déposer la matière plastique à partir du fond du moule destiné à former la partie supérieure de l'enveloppe, et de manière que la matière plastique coule au travers du moule et enrobe ledit ensemble à partir d'un centre axial supérieur du dispositif de fermeture. La matière plastique est ainsi coulée contre le fond du moule, et se déplace parallèle au tag RFID lorsqu'il est disposé sur la surface supérieure du lest Dans le mode de réalisation illustré aux figures 2 et 3, le canal axial 15 d'injection est également rempli au moins partiellement de matière plastique.

Dans un mode de réalisation, le procédé comporte également une étape préalable d'ajustement d'une fréquence de résonance du tag RFID 30 en fonction d'un environnement métallique du bouchon.

Dans un mode de réalisation préféré, la fréquence de résonance initiale du tag RFID 30 est choisie pour cibler une fréquence de résonance finale de 13.56 MHz lorsque le tag RFID est intégré dans le bouchon, c'est-à-dire la fréquence de résonance cible de la technologie NFC. Toutefois, la demanderesse s'est aperçue que lorsque le tag RFID 30 est intégré dans un environnement métallique, la fréquence de résonance finale du tag RFID 30 est modifiée par rapport à sa fréquence de résonance initiale.

Pour pallier à cette problématique, l'invention propose de choisir la fréquence initiale de résonance du tag RFID en fonction d'un environnement métallique du bouchon, et notamment par rapport au matériau choisi pour le lest et/ou la présence d'un revêtement métallique sur l'enveloppe de tête.

Dans un mode de réalisation, l'invention propose de choisir une fréquence de résonance initiale du tag RFID :
a) d'environ 13,56 MHz pour un lest en plastique densifié avec des charges minérales neutres (par exemple de la silice) ou tout autre matériau non métallique. En effet, lorsque le lest n'apporte pas d'éléments métalliques à l'environnement du tag RIFD, la fréquence de résonance initiale n'est pas significativement modifiée et reste proche de la fréquence de résonance initiale ciblée.
b) supérieure à 13,56 MHz pour un lest en plastique avec des charges minérales métalliques (par exemple des oxydes de fer) car la fréquence de résonance aura une tendance à baisser lorsque le tag RFID est disposé en continuité ou près de ce type de lest
c) inférieure à 13,56 MHz lorsque le lest est en métal car la fréquence de résonance aura une tendance à augmenter lorsque le tag est disposé en continuité ou près de ce type de lest.

Il est ainsi possible d'assurer le bon fonctionnement du tag RFID lorsqu'il est à proximité ou en continuité d'un lest 17 métallique. Une fréquence de résonance initiale précise sera choisie en fonction de l'aménagement des composants internes de la tête du bouchon, et notamment de la continuité entre un lest métallique et le tag RFID ou de la présence d'un matériau intermédiaire. Les exemples ci-après sont donnés à titre non limitatif, el l'homme du métier pourra au cas par cas ajuster la fréquence initiale du tag RFID 30 en fonction des caractéristiques du bouchon dans lequel il souhaite intégrer le tag RFID.

### Example 1- Fig. 1

Le bouchon comporte un tag RFID et un lest en plastique densifié avec une charge minérale métallique (oxydes de fer) ; une cale intermédiaire en plastique de 1.5 mm est disposée entre le tag RFID et le leste. L'utilisation d'un tag RFID d'une fréquence initiale de résonance de ∼15 MHz permet après injection d'obtenir une fréquence de résonance proche de 13.56 MHz qui est la fréquence de résonance cible de la technologie NFC.

### Example 2-Fig. 2

Le bouchon comporte un tag RFID et un lest en plastique densifié avec une charge minérale métallique (oxydes de fer) ; le tag RFID est directement collé sur le lest. L'utilisation d'un tag RFID d'une fréquence initiale de résonance de ∼16 MHz permet après injection d'obtenir la fréquence de résonance cible proche de 13.56 MHz.

Dans le mode de réalisation dans lequel l'enveloppe comporte un revêtement métallique, la fréquence initiale du tag RFID sera également adaptée, de manière similaire et si nécessaire, lorsque ledit revêtement modifie la fréquence de résonance finale du tag RFID dans le bouchon.

La présente invention propose ainsi un procédé permettant la fabrication simplifiée de bouchons de luxe intégrant un tag RFID, notamment des bouchons avec une tête arrondie en plastique comportant un lest et une surface extérieure décorée. Ce procédé est très avantageux en ce qu'il est possible d'intégrer un tag RFID dans ledit bouchon avec un nombre d'étapes réduites, ainsi que d'intégrer ledit tag RFID sans l'endommager. Le procédé de l'invention permet aussi d'adapter les caractéristiques du tag RFID pour assurer son bon fonctionnement lorsque des composants métalliques sont utilisés dans ledit bouchon.

## Revendications

1. Procédé de fabrication d'un bouchon (1), ledit bouchon comportant une tête (10) comportant une enveloppe (11) comprenant à son intérieur un tag RFID (30) et un lest (17), **caractérisé en ce que** ledit procédé comporte les actions suivantes :
- obtention d'un tag RFID (30) et d'un lest (17) comportant respectivement un trou (300, 170) axial ;
- assemblage du tag RFID (30) sur le lest (17) pour former un ensemble dans lequel le trou (170) du lest et le trou (300) du tag RFID sont superposés pour définir un canal axial (15) d'injection dudit ensemble ;
- d'injection l'enveloppe (11) de la tête, dans laquelle ledit ensemble est disposé dans un moule, et une buse d'injection est insérée dans le canal axial (15) dudit ensemble pour injecter de la matière plastique contre un fond du moule, ladite matière plastique se répartissant dans le moule pour enrober l'ensemble à partir dudit canal axial (15).

2. Procédé selon la revendication 1, comportant une étape préalable dans laquelle le tag RFID (30) est recouvert d'une part et de l'autre d'une couche de protection en matière plastique.

3. Procédé selon l'une des revendications précédentes, comportant une étape d'ajustement d'une fréquence initiale du tag RFID (30) comportant les sous étapes-suivantes :
- détermination d'une fréquence de fonctionnement cible du tag RFID lorsqu'il sera intégré dans le bouchon (1) ;
- sélection d'une fréquence initiale du tag RFID avant d'être intégré dans le bouchon (1), ladite fréquence initiale permettant d'obtenir une fréquence de résonance finale proche de la fréquence de résonance cible après l'injection de l'enveloppe de la tête et lorsque ledit tag RFID est intégré dans le bouchon.

4. Procédé selon la revendication 3, dans lequel le lest (17) comporte un composant métallique, et la fréquence initiale du tag RFID (30) est supérieure ou inférieure à la fréquence de résonance cible.

5. Procédé selon l'une des revendications 3 ou 4, dans lequel la fréquence de résonance cible est d'environ 13,56 MHz et la fréquence de résonance initiale du tag RFID (30) est :
- supérieure à 13,56 MHz pour un lest (17) en matériau plastique densifié avec des charges minérales métalliques ; ou
- inférieure à 13,56 MHz pour un lest (17) en métal.

6. Bouchon (1) de récipient comportant une tête (100) comportant une enveloppe (11) intégrant un ensemble comprenant un tag RFID (30) et un lest (17), ledit bouchon étant **caractérisé en ce que** :
- le tag RFID (30) et le lest (17) comportent respectivement un trou (300, 170) axial ;
- le tag RFID est assemblé sur le lest de manière à superposer le trou (300) dudit tag RFID et le trou (170) dudit lest et définir un canal axial (15) d'injection plastique ;
- l'enveloppe (11) est composée d'une seule pièce en matière plastique recouvrant ledit ensemble.

7. Bouchon suivant la revendication 6, dans lequel le lest (17) comporte une forme épousant sensiblement la forme de l'enveloppe (11) de tête (10) et comporte optionnellement un évidemment (171) pour loger le tag RFID (30).

8. Bouchon suivant l'une des revendications précédentes comportant un tag RFID (30) sous la forme d'un anneau antenne et/ou dans lequel le tag RFID est complexé par au moins une couche de matière plastique additionnelle.

9. Bouchon suivant l'une des revendications précédentes, dans lequel le canal axial (15) du bouchon comporte de la matière plastique de l'enveloppe de tête (11).

10. Bouchon suivant l'une des revendications précédentes, dans lequel le lest (17) est en matériau plastique densifié comportant des charges minérales neutres et/ou le tag RFID (30) est écarté du lest (17) à l'intérieur du bouchon, et le tag RFID (30) présente :
- une fréquence de résonance finale lorsque le tag RFID est intégré dans le bouchon (1) ;
- et une fréquence de résonance initiale mesurée lorsque ledit TAG RFID est à l'extérieur du bouchon étant sensiblement proche de ladite fréquence de résonance cible.

11. Bouchon suivant l'une des revendications 6 à 9, dans lequel le lest (17) est en matériau plastique densifié avec des charges minérales métalliques, et le tag RFID (30) présente :
- une fréquence de résonance finale mesurée lorsque le tag RFID est intégré dans le bouchon (1), et;
- une fréquence de résonance initiale mesurée lorsque ledit TAG RFID est à l'extérieur du bouchon étant supérieure à ladite fréquence de résonance cible.

12. Bouchon suivant l'une des revendications 6 à 9, dans lequel le lest (17) est en matériau métallique tel que de l'acier ou du zamak, et le tag RFID présente :
- une fréquence de résonance finale lorsque le tag RFID (30) est intégré dans le bouchon (1) ;
- et une fréquence de résonance initiale mesurée lorsque ledit TAG RFID est à l'extérieur du bouchon étant inférieure à ladite fréquence de résonance cible.

13. Bouchon suivant l'une des revendications précédentes, comportant une cale intermédiaire (40) disposée entre le lest (17) et le tag RFID (30) et/ou dans lequel un espace vide est aménagé entre le lest (17) etle tagRFID (30).

14. Bouchon suivant l'une des revendications précédentes, dans lequel l'enveloppe (11) comporte un revêtement extérieur métallique.
